# EUROPEAN PATENT SPECIFICATION

(11) **EP 2 393 264 B1**
(45) Date of publication and mention of the grant of the patent: **10.05.2017**
(21) Application number: 10164935.8
(22) Date of filing: 04.06.2010
(51) Int. Cl.: H04M 1/04, H04M 1/72, H04M 1/60

(54) **A headset base with wireless connection to a communication base**
Headset-Basis mit drahtloser Verbindung mit einer Kommunikationsbasis
Base de casque avec connexion sans fil sur une base de communication

(43) Date of publication of application: 07.12.2011
(73) Proprietor: GN Audio A/S, 2750 Ballerup (DK)
(72) Inventor: Heise, Stefan, DK-2700, Brønshøj (DK)
(74) Representative: Zacco Denmark A/S

(56) References cited:
- WO-A1-2008/116999
- US-A1- 2004 224 650
- US-A1- 2006 252 470
- US-A1- 2008 280 561
- US-A1- 2009 010 246

## Description

### Technical Field

The invention relates to a communication system comprising
a headset system and a cordless telephone,
wherein the headset system comprises
   a wireless headset with a headset transceiver and
   a headset base unit with headset base transceiver means, wherein the headset transceiver and the headset base transceiver means are adapted to be connected by a first radio link,
and wherein the cordless telephone comprises
   a wireless telephone handset with a handset transceiver and
   a telephone base unit with telephone base transceiver means, which is adapted to be connected to a communication network, such as the public switched telephone network or the Internet,
   wherein the handset transceiver and the telephone base transceiver means are adapted to be connected by a second radio link according to a first radio standard.

### Background Art

Wireless headset systems for use in offices and contact centres are well known. They normally comprise a wireless headset with a headset transceiver and a headset base with a corresponding headset base transceiver. The headset transceiver and the headset base transceiver can be connected by a radio link. Wireless headsets following different radio standards are known, but DECT (Digital Enhanced Cordless Telecommunications) and Bluetooth™ are the most prevalent. Bluetooth™ is the prevailing radio standard used by mobile phones and headsets, and DECT is the prevailing standard used by office headsets and their base cradles.

DECT is also the prevailing radio standard for cordless phones, i.e. between the handset and its base. DECT devices can be GAP compatible. GAP is acronym for Generic Access Profile and describes a set of mandatory requirements to allow any conforming DECT Fixed Part (base) to interoperate with any conforming DECT Portable Part (handset or headset) in order to provide basic telephony services.

DECT phones are sometimes sold with more than one handset. The extra handsets are only provided with charging cradles, as the extra handsets are communicates with the main headset base. A system with a main base, a main handset and one or more extra handsets also provides the possibility for intercom features, whereby people in a home can communicate with each other via the handsets. An example of a Cordless DECT phone with two extra handsets is Panasonic KX-TG6411.

It is possible to use GAP compatible handsets and headsets with GAP compatible phone bases. Thus, a consumer can buy a GAP compatible DECT headset and connect it with the base station of his GAP compatible DECT phone in order to make hands free telephone calls. In this case, the headset base station functions as a charger only, as the headset transceiver communicates directly with the telephone base transceiver. Reference is also made to prior art documents US 2004/0224650, US 2008/0280561 and US 2009/0010246.

### Disclosure of Invention

The object of the invention is to provide a new and advantageous communication system comprising a phone base, a cordless handset, a headset base and a cordless headset. The invention is as set out in claim 1, preferred forms being set out in dependent claims 2 to 15. The communications system according to the invention is characterized in that the headset base transceiver means and the telephone base transceiver means are adapted to be connected by a third radio link according to the first radio standard, wherein the headset can be used for a telephone call via the first radio link and the third link. With such a system, it is possible to connect a headset system to a cordless telephone and still make use of headset base features, such as advanced user interfaces, headset base connectivity, status information indicators etc.

According to an embodiment, also the first radio link follows the first radio standard.

The first radio standard can be the Digital Enhanced Cordless Telecommunications standard (DECT). DECT was developed by European Telecommunications Standards Institute (ETSI).

Preferably, the headset base unit and the telephone base unit are GAP compatible. This ensures an easy exchange of parts of the system. The user can for example buy a new headset system to his existing cordless telephone or vice versa.

The headset base transceiver means may comprise a first headset base transceiver, which is adapted to connect to the headset transceiver, and a second headset base transceiver, which is adapted to connect to the telephone base transceiver means. In this case, there is more freedom in configuring the different transceivers as master or slave.

Preferably, the second headset base transceiver is configured as slave and the telephone transceiver means as master.

According to a preferred embodiment, the headset base unit it is simultaneously connectable to additional telecommunication devices.

Preferably, the headset base unit is adapted to be able to instruct a connected telecommunication device to initiate an outgoing call. Thus, the user does not have to use the connected telecommunication device in order to initiate a call.

The headset base may comprise a base user interface. A great advantage with this is that the user, while wearing the headset, can use the interface while looking at it, which is not the case with a user interface on the headset.

According to a preferred embodiment, the headset base unit comprises a display.

In a particularly preferred embodiment, the display is a touch-screen display, which makes up a user interface.

According to a preferred embodiment, the speaker volume, microphone volume, and speaker equalisation can be adjusted by means of the touch-screen display.

The touch-screen display may be adapted to display a keypad for dialling a telephone number.

The headset base unit may be adapted to store a call list or phone book and show this call list or phone book on the display, such that the user can initiate an outgoing call by selecting a contact from the call list or phone book.

Preferably, the display is adapted to show information about caller identity or callee identity.

In addition, the headset base can be adapted to show information about the charging status of the headset battery.

### Brief Description of the Drawings

The invention is explained in detail below with reference to the drawing illustrating a preferred embodiment of the invention and in which
Fig. 1 is a perspective view of a general communication system according to the invention,
Fig. 2 is a diagram showing some of the main elements of the different parts of the telecommunication system according to a first embodiment of the invention, and
Fig. 3 is a diagram showing some of the main elements of the different parts of a second embodiment of a telecommunication system according to the invention.

### Modes for Carrying out the Invention

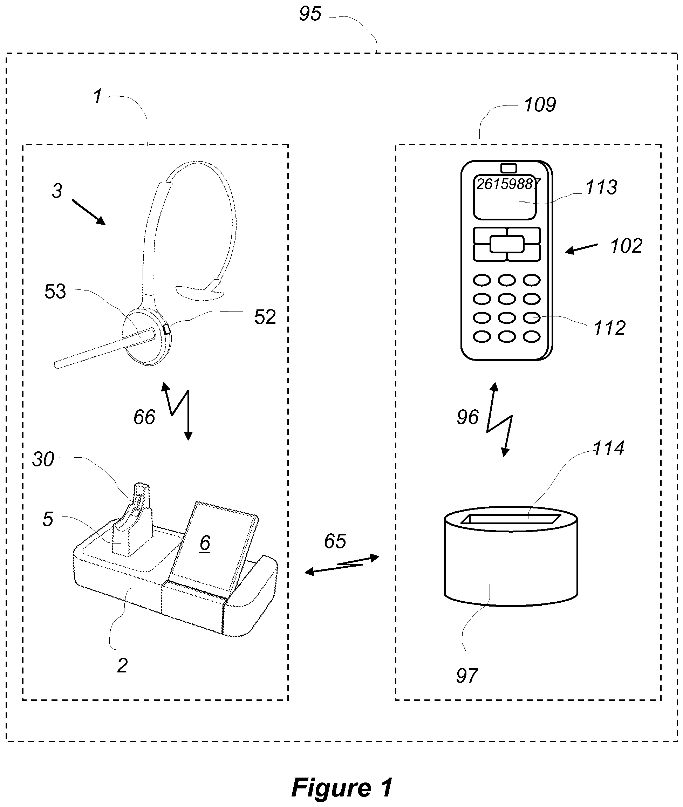

Figure 1 is showing a communication system 95 according to the invention. The communication system 95 comprises a cordless headset system 1 and a cordless telephone 109. It should be noted, that the terms cordless and wireless used here has the same meaning and are interchangeable. The cordless headset system 1 comprises a headset 3 and a headset base unit 2, while the cordless telephone 109 comprises a handset 102 and a telephone base unit 97. The headset 3 comprises a multi-function button 52 for inter alia receiving and ending calls and an elongate volume touch button 53. The headset base unit 2 comprises a headset holder 5 with charging terminals 30. When the headset 3 is received by the headset holder 5 the charging terminals 30 contacts corresponding not-shown terminals on the headset and charges an internal battery of the headset 3. The headset base unit 2 further comprises a touch-screen display 6, which functions as a user-interface, by means of which the user can adjust settings and initiate or accept calls. The telephone base unit 97 comprises a handset holder 114, which can receive the handset 102 and recharge an internal battery of the handset 102 via not-shown charging terminals in the handset holder 114 and on the handset 102. The handset 102 comprises a display 113 and a user-interface in the form of inter alia buttons 112.

Both the headset system 1 and the telephone 109 are GAP compatible DECT systems, whereby they can communicate with each other. The headset 3 and the headset base unit 2 communicate with each other via a radio link 66 according to the DECT standard. The handset 102 and the telephone base unit 97 also communicate via a radio link 96 according to the DECT standard. Finally, the headset base unit 2 and the telephone base unit 97 communicate via a radio link 65 according to the DECT standard.

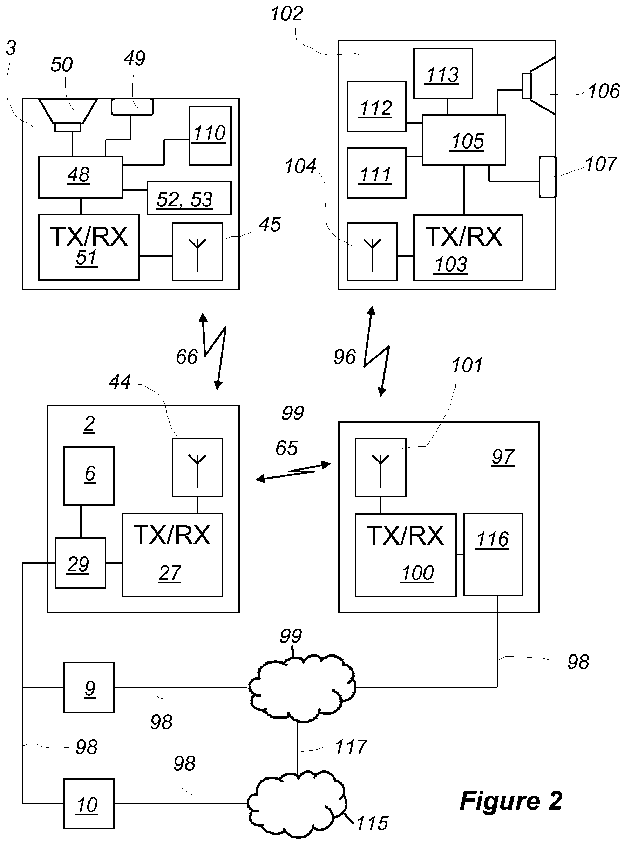

Figure 2 is a diagram showing some of the main elements of the different components of the telecommunication system 95 according to a first embodiment of the invention. The headset 3 comprises a speaker 50, a microphone 49, a processor 48, a headset transceiver 51, a headset antenna 45, a rechargeable battery 110 and a headset user interface 52, 53. The headset base unit 2 comprises a touch-screen display 6, a processor 29, a headset base transceiver 27 and a headset base antenna 44. The charging contacts 30 and other parts, which are not essential for the understanding of the invention, are left out for clarity reasons. Radio signals, which include voice and data, are transferred between the headset transceiver 51 and the headset base transceiver 27 via a first radio link 66, which follows the DECT standard. The headset base unit 2 is by means of cords 98 connected to a desk phone 9 and a personal computer 10. The desk phone 9 can be a standard corded desk phone which by means of cords 98 is connected to the public switched telephone network (PSTN) 99. The personal computer 10 is by means of cords 98 connected to the Internet and my comprise Internet Protocol telephony software or other communication software, which can be utilized by the headset system 1. As symbolized with the line 117, the public switched telephone network 99 is connected with the Internet 115, so that voice calls can be established between PSTN telephones and IP telephones. All the cords 98 can be replaced by radio links.

The handset 102 comprises a processor 105, a rechargeable battery 111, a handset user interface 112, a display 113, a speaker 106, a microphone 107, a handset transceiver 103 and a handset antenna 104. The handset user interface 112 comprises primarily buttons, so that the user can dial a number, choose a contact from an internal phone book, adjust speaker volume etc. The display 113 is typically used for showing caller ID or callee ID, different settings, battery level etc. The telephone base unit 97 comprises a telephone base transceiver 100, a telephone base processor 116 and a telephone base antenna 101. The handset 102 and the telephone base unit 97 communicate via a second radio link 96, when the handset 102 is removed from the telephone base unit 97. This radio link 96 follows the DECT standard, just like the first radio link 66 between the headset 3 and the headset base unit 2. The telephone base unit 97 is by means of a cord 98 connected to the public switched telephone network 99.

The headset base unit 2 and the telephone base unit 97 also communicate wirelessly via a third radio link 65, which follows the DECT standard just link the first 66 and the second 96 radio link. As the three radio links 66, 96, 65 all follow the DECT standard and support the GAP-profile, only one headset base transceiver 27 is needed to allow radio communication with both the headset 3 and the telephone base unit 97. Normally, a DECT phone is configured with the phone base as a master and the handset as a slave. The base is also typically the master and the headset slave in wireless headset systems according to the DECT standard. A master can be wirelessly connected to several slaves, and a slave can be connected to more than one master. However, two masters can normally not be connected. Therefore, the headset base unit 2 is configured to act as a master in relation to the headset 3 and a slave in relation to the telephone base unit 97. This configuration can be obtained in different ways. According to the embodiment shown in figure 2, in which the headset base nit 2 only has one transceiver 27, the same transceiver 27 is configured to work simultaneously as a master and a slave. This is possible, if the transceiver chip is powerful enough and programmed accordingly.

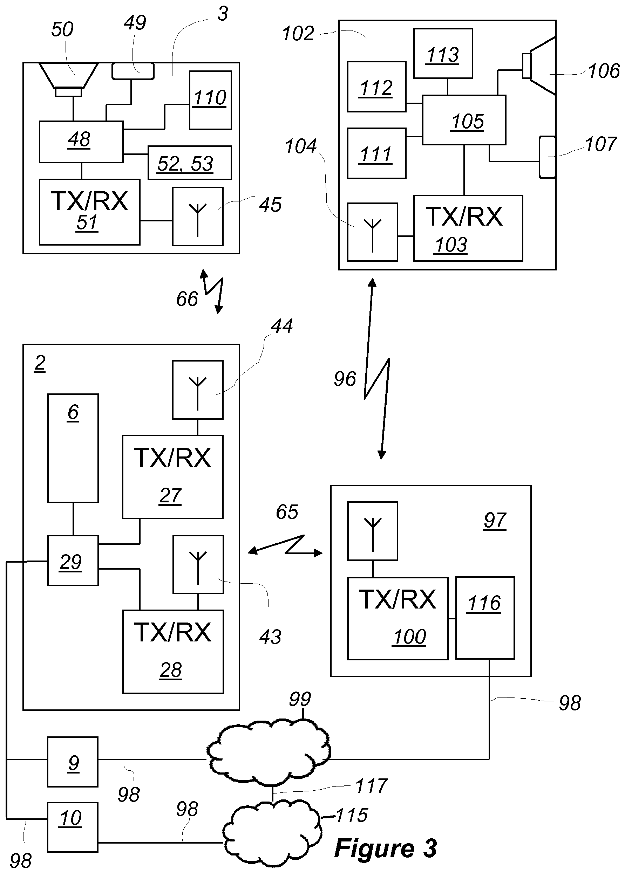

Figure 3 discloses a second embodiment of a communication system 95 according to the invention. The second embodiment differs from the first embodiment by the headset base unit 2 comprising two separate transceivers 27, 28 and antennas 44, 43. The first headset base transceiver 27 and the first headset base antenna 44 communicate via the first radio link 66 with the headset 3. The second headset base transceiver 28 and the second headset base antenna 43 communicate via the third radio link 65 with the telephone base unit 97. In this embodiment, the first headset base transceiver 27 is master and the second headset base transceiver 28 is slave.

In the second embodiment shown in Figure 3, each of the first and second headset base transceiver 27, 28 has an antenna. However,

In both embodiments shown here, a standard DECT telephone with a master transceiver in the base and a slave transceiver in the handset can be used. Thus, the user can easily replace his telephone if he wishes.

In the description above the, term "transceiver" is intended to mean a combination of a transmitter and a receiver in any physical embodiment. For example, the transmitter and the receiver can be combined in one chip or be two separate chips.

**List of reference signs:**

| | | | |
|---|---|---|---|
| 1 | Headset system | 98 | wire |
| 2 | headset base unit | 99 | Public Switched Telephone Network |
| 3 | headset | 100 | telephone base transceiver |
| 5 | headset holder | 101 | telephone base antenna |
| 6 | touch-screen display | 102 | handset |
| 9 | desk phone | 103 | handset receiver |
| 10 | personal computer | 104 | handset antenna |
| 27 | first headset base transceiver | 105 | handset processor |
| 28 | second headset base transceiver | 106 | handset speaker |
| 29 | headset base processor | 107 | handset microphone |
| 30 | charging terminals | 108 | handset user interface |
| 43 | second headset base antenna | 109 | cordless telephone |
| 44 | first headset base antenna | 110 | headset battery |
| 45 | headset antenna | 111 | handset battery |
| 45 | headset antenna | 112 | handset user interface |
| 52 | headset multi-function button | 113 | handset display |
| 53 | headset volume button | 114 | handset holder |
| 65 | third radio link | 115 | the Internet |
| 66 | first radio link | 116 | telephone base processor |
| 95 | communication system | 117 | connection between PSTN and the |
| 96 | second radio link | | Internet |
| 97 | telephone base unit | | |

## Claims

1. A communication system (95) comprising
a headset system (1) and a cordless telephone (109),
wherein the headset system (109) comprises
a wireless headset (3) with a headset transceiver (51) and
a headset base unit (2) comprising a headset holder (5) with charging terminals (30) and with headset base transceiver means (27, 28), wherein the headset transceiver (51) and the headset base transceiver means (27, 28) are adapted to be connected by a first radio link (66),
and wherein the cordless telephone (109) comprises
a wireless telephone handset (102) with a handset transceiver (103) and
a telephone base unit (97) with telephone base transceiver means (100), which is adapted to be connected to a communication network (99), such as the public switched telephone network or the Internet,
wherein the handset transceiver (103) and the telephone base transceiver means (100) are adapted to be connected by a second radio link (96) according to a first radio standard,
**characterized in that** the headset base transceiver means (27) and the telephone base transceiver means (100) are adapted to be connected by a third radio link (65) according to the first radio standard, wherein the headset (3) is adapted to be used for a telephone call via the first radio link (66) and the third link (65).

2. A communication system (95) according to claim 1, wherein the first radio link follows the first radio standard.

3. A communication system (95) according to claim 1 or 2, wherein the first radio standard is the Digital Enhanced Cordless Telecommunications standard.

4. A communication system (95) according to claim 3, wherein the headset base unit (2) and the telephone base unit (97) are GAP compatible.

5. A communication system (95) according to any of the preceding claims, wherein the headset base transceiver means comprise a first headset base transceiver (27), which is adapted to connect to the headset transceiver (51), and a second headset base transceiver (28), which is adapted to connect to the telephone base transceiver means (100).

6. A communication system (95) according to claim 5, wherein the second headset base transceiver (28) is configured as slave and the telephone base transceiver means (100) is configured as master.

7. A communication system (95) according to any of the preceding claims, wherein the headset base unit (2) is simultaneously connectable to additional telecommunication devices (9, 10).

8. A communication system (95) according to any of the preceding claims, wherein the headset base unit (2) is adapted to be able to instruct a connected telecommunication device (10, 97) to initiate an outgoing call.

9. A communication system (95) according to any of the preceding claims, wherein the headset base comprises a base user interface (6).

10. A communication system (95) according to any of the preceding claims, wherein the headset base unit (2) comprises a display (6).

11. A communication system (95) according to claim 10, wherein the display (6) is a touch-screen display (6) which makes up a user interface.

12. A communication system (95) according to claim 11, wherein one or more of headset speaker volume, microphone volume, and speaker equalisation can be adjusted by means of the touch-screen display (6).

13. A communication system (95) according to claim 11 or 12, wherein the touch-screen display (6) is adapted to display a keypad for dialling a telephone number.

14. A communication system (95) according to claim 8 and any of the claims 10-13, wherein the headset base unit (2) is adapted to store a call list or phone book and show this call list or phone book on the display (6), and wherein the user can initiate an outgoing call by selecting a contact from the call list or phone book.

15. A communication system (95) according to any of the claims 10-14, wherein the display (6) is adapted to show information about caller identity or callee identity.

## Patentansprüche

1. Kommunikationssystem (95) umfassend
ein Headset-system (1) und ein Funktelefon (109),
wobei das Headset-system (109)
ein drahtloses Headset (3) mit einem Headset-Transceiver (51) und
eine Headset-Basiseinheit (2) umfasst, umfassend eine Headset-Halterung (5) mit Ladestationen (30) und mit Headset-Basisttransceivermitteln (27, 28), wobei der Headset-Transceiver (51) und die Headset-Basistransceivermittel (27, 28) dafür eingerichtet sind, durch eine erste Funkverbindung (66) verbunden zu werden,
und wobei das Funktelefon (109)
einen drahtlosen Telefonhandapparat (102) mit einem Handapparat-Transceiver (103) und
eine Telefon-Basiseinheit (97) mit Telefon-Basistransceivermitteln (100) umfasst, dafür eingerichtet, mit einem Kommunikationsnetz (99), wie beispielsweise mit dem öffentlichen Telefonnetz oder dem Internet, verbunden zu werden,
wobei der Handapparat-Transceiver (103) und die Telefon-Basistransceivermittel (100) dafür eingerichtet sind, durch eine zweite Funkverbindung (96) nach einem ersten Funkstandard verbunden zu werden,
**dadurch gekennzeichnet, dass** die Headset-Basistransceivermittel (27) und die Telefon-Basistransceivermittel (100) dafür eingerichtet sind, durch eine dritte Funkverbindung (65) nach dem ersten Funkstandard verbunden zu werden, wobei das Headset (3) dafür eingerichtet ist, für einen Telefonanruf über die erste Funkverbindung (66) und die dritte Funkverbindung (65) verwendet zu werden.

2. Kommunikationssystem (95) nach Anspruch 1, wobei die erste Funkverbindung dem ersten Funkstandard folgt.

3. Kommunikationssystem (95) nach Anspruch 1 oder 2, wobei der erste Funkstandard DECT - Digital Enhanced Cordless Telecommunications - ist.

4. Kommunikationssystem (95) nach Anspruch 3, wobei die Headset-Basiseinheit (2) und die Telefon-Basiseinheit (97) GAP-kompatibel sind.

5. Kommunikationssystem (95) nach einem der vorgehenden Ansprüche, wobei die Headset-Basistransceivermittel einen ersten Headset-Basistransceiver (27), der dafür eingerichtet ist, mit dem Headset-Transceiver (51) verbunden zu werden, und einen zweiten Headset-Basistransceiver (28), der dafür eingerichtet ist, mit den Telefon-Basistransceivermitteln (100) verbunden zu werden, umfasst.

6. Kommunikationssystem (95) nach Anspruch 5, wobei der zweite Headset-Basistransceiver (28) als Slave und das Telefon-Basistransceivermittel (100) als Master konfiguriert ist.

7. Kommunikationssystem (95) nach einem der vorgehenden Ansprüche, wobei die Headset-Basiseinheit (2) mit zusätzlichen Telekommunikationsvorrichtungen (9, 10) gleichzeitig verbunden werden kann.

8. Kommunikationssystem (95) nach einem der vorgehenden Ansprüche, wobei die Headset-Basiseinheit (2) dafür eingerichtet ist, eine verbundene Telekommunikationsvorrichtung (10, 97) dafür beauftragen zu können, einen abgehenden Anruf einzuleiten.

9. Kommunikationssystem (95) nach einem der vorgehenden Ansprüche, wobei die Headset-Basis eine Basisbenutzer-Schnittstelle (6) umfasst.

10. Kommunikationssystem (95) nach einem der vorgehenden Ansprüche, wobei die Headset-Basiseinheit (2) eine Anzeige (6) umfasst.

11. Kommunikationssystem (95) nach Anspruch 10, wobei die Anzeige (6) ein Berührungsbildschirm (6) ist, der eine Benutzerschnittstelle ausmacht.

12. Kommunikationssystem (95) nach Anspruch 11, wobei eines oder mehrere von Headset-Lautsprechervolumen, Mikrofonvolumen und Lautsprecherentzerrung mittels des Berührungsbildschirms (6) eingestellt werden kann bzw. können.

13. Kommunikationssystem (95) nach Anspruch 11 oder 12, wobei der Berührungsbildschirm (6) dafür eingerichtet ist, ein Tastenfeld zum Wählen einer Telefonnummer anzuzeigen.

14. Kommunikationssystem (95) nach Anspruch 8 und einem der Ansprüche 10 bis 13, wobei die Headset-Basiseinheit (2) dafür eingerichtet ist, eine Anrufliste oder ein Telefonbuch zu speichern und diese Anrufliste oder dieses Telefonbuch auf der Anzeige (6) anzuzeigen, und wobei der Benutzer einen abgehenden Anruf durch Wahl eines Kontakts von der Anrufliste oder dem Telefonbuch einleiten kann.

15. Kommunikationssystem (95) nach einem der Ansprüche 10 bis 14, wobei die Anzeige (6) dafür eingerichtet ist, Information über die Identität des Anrufers oder des Angerufenen anzuzeigen.

## Revendications

1. Système de communication (95) comprenant
un système de casque (1) et un téléphone sans fil (109),
dans lequel le système de casque (109) comprend
un casque sans fil (3) avec un émetteur-récepteur de casque (51) et
une unité de base de casque (2) comprenant un support de casque (5) avec des terminaux de chargement (30) et avec des moyens d'émetteur-récepteur de base de casque (27, 28), dans lequel l'émetteur-récepteur de casque (51) et les moyens d'émetteur-récepteur de base de casque (27, 28) sont adaptés de manière à être reliés par une première liaison radio (66),
et dans lequel le téléphone sans fil (109) comprend
un combiné téléphonique sans fil (102) avec un combiné d'émetteur-récepteur (103) et
une unité de base téléphonique (97) avec un moyen d'émetteur-récepteur de base téléphonique (100), qui est adaptée de manière à être connectée à un réseau de communication (99) tel que le réseau téléphonique public commuté ou l'internet,
dans lequel le combiné d'émetteur-récepteur (103) et le moyen d'émetteur-récepteur de base téléphonique (100) sont adaptés de manière à être reliés par une deuxième liaison radio (96) selon une première norme radio,
**caractérisé en ce que** le moyen d'émetteur-récepteur de base de casque (27) et le moyen d'émetteur-récepteur de base téléphonique (100) sont adaptés de manière à être reliés par une troisième liaison radio (65) selon une première norme de radio, le casque (3) étant adapté de manière à être utilisé pour un appel téléphonique par l'intermédiaire de la première liaison radio (66) et la troisième liaison (65).

2. Système de communication (95) selon la revendication 1, dans lequel la première liaison radio suit la première norme de radio.

3. Système de communication (95) selon la revendication 1 ou 2, dans lequel la première norme radio est la norme du Système de télécommunications numériques améliorées sans cordon.

4. Système de communication (95) selon la revendication 3, dans lequel l'unité de base de casque (2) et l'unité de base téléphonique (97) sont compatibles GAP.

5. Système de communication (95) selon l'une quelconque des revendications précédentes, dans lequel les moyens d'émetteur-récepteur de base de casque comprennent un premier émetteur-récepteur de base de casque (27) qui est adapté de manière à se connecter à l'émetteur-récepteur de casque (51), et un deuxième émetteur-récepteur de base de casque (28) qui est adapté de manière à se connecter au moyen d'émetteur-récepteur de base téléphonique (100).

6. Système de communication (95) selon la revendication 5, dans lequel le deuxième émetteur-récepteur de base de casque (28) est configuré en tant qu'esclave, et le moyen d'émetteur-récepteur de base téléphonique (100) est configuré en tant que maître.

7. Système de communication (95) selon l'une quelconque des revendications précédentes, dans lequel l'unité de base de casque (2) est simultanément connectable aux dispositifs de télécommunication supplémentaires (9, 10).

8. Système de communication (95) selon l'une quelconque des revendications précédentes, dans lequel l'unité de base de casque (2) est adaptée de manière à être capable de commander un dispositif de télécommunication connecté (10, 97) à lancer un appel sortant.

9. Système de communication (95) selon l'une quelconque des revendications précédentes, dans lequel la base de casque comprend une interface utilisateur de base (6).

10. Système de communication (95) selon l'une quelconque des revendications précédentes, dans lequel l'unité de base de casque (2) comprend un dispositif d'affichage (6).

11. Système de communication (95) selon la revendication 10, dans lequel le dispositif d'affichage (6) est un affichage à écran tactile (6) qui constitue une interface utilisateur.

12. Système de communication (95) selon la revendication 11, dans lequel l'un ou plusieurs du volume du haut-parleur de casque, du volume du microphone et de l'égalisation du haut-parleur peut/peuvent être réglé(s) au moyen de l'écran tactile (6).

13. Système de communication (95) selon la revendication 11 ou 12, dans lequel l'affichage à écran tactile (6) est adapté de manière à afficher un clavier pour composer un numéro de téléphone.

14. Système de communication (95) selon la revendication 8 et l'une quelconque des revendications 10 à 13, dans lequel l'unité de base de casque (2) est adaptée de manière à stocker une liste d'appels ou un annuaire téléphonique et à afficher cette liste d'appels ou cet annuaire téléphonique sur le dispositif d'affichage (6), et dans lequel l'utilisateur peut lancer un appel sortant en sélectionnant un contact dans la liste d'appels ou l'annuaire téléphonique.

15. Système de communication (95) selon l'une quelconque des revendications 10 à 14, dans lequel le dispositif d'affichage (6) est adapté de manière à afficher des informations sur l'identité de l'appelant ou l'identité de l'appelé.
